# EUROPÄISCHE PATENTSCHRIFT

(11) **EP 2 032 398 B1**
(45) Veröffentlichungstag und Bekanntmachung des Hinweises auf die Patenterteilung: **19.06.2013**
(21) Anmeldenummer: 07724312.9
(22) Anmeldetag: 17.04.2007
(51) Int. Cl.: B60R 19/34

(54) **PROFILELEMENT ZUM BEFESTIGEN EINER STOSSSTANGE AN LÄNGSTRÄGERN EINES FAHRZEUGES SOWIE VERFAHREN DAZU**
PROFILED ELEMENT FOR FASTENING A BUMPER TO LONGITUDINAL BEAMS OF A VEHICLE, AND METHOD THEREFOR
ÉLÉMENT PROFILÉ SERVANT À LA FIXATION D'UN PARE-CHOCS SUR LES LONGERONS D'UN VÉHICULE AUTOMOBILE, ET PROCÉDÉ CORRESPONDANT

(30) Priorität: 25.04.2006 DE 102006019654; 25.04.2006 DE 102006040178
(43) Veröffentlichungstag der Anmeldung: 11.03.2009
(73) Patentinhaber: GM Global Technology Operations LLC, Detroit, MI 48265-3000 (US)
(72) Erfinder: FRANK, Simon, 78250 Tengen/Watterdingen (DE)
(74) Vertreter: Strauss, Peter
(86) Internationale Anmeldenummer: PCT/EP2007/003375
(87) Internationale Veröffentlichungsnummer: WO 2007/121896

(56) Entgegenhaltungen:
- EP-A- 1 342 625
- EP-A- 1 862 377
- FR-A- 2 876 645
- US-A- 5 725 267

## Beschreibung

Die Erfindung betrifft ein Profilelement zum Befestigen einer Stoßstange an Längsträgern eines Fahrzeuges; das Profilelement ist als wenigstens eine Seitenwand und zwei an diese anschließende Querwände enthaltendes Profil mit einem Hohlprofilträgerabschnitt gestaltet, der einem aus Stahl geformten Längsträger als Steckabschnitt für den Innenraum des Längsträgers zugeordnet ist. Zudem erfasst die Erfindung ein Verfahren zum Einbau des Profilelements.

Der EP 1 079 992 B1 ist eine Vorrichtung in einem Fahrzeug zum Absorbieren von Aufprallenergie mit einem Befestigungsträger für ein Stoßstangenelement an dem Fahrzeugrahmen zu entnehmen; jener Befestigungsträger hat mindestens zwei in Längsrichtung verlaufende Wände, die mit einer oder mehreren Öffnungen versehen sind, um einen oder mehrere durchgehende Bolzen aufzunehmen. Die Bolzen werden bei einem Kollisionsaufprall oder einem Fahrzeugzusammenstoß relativ zu den jeweiligen energieabsorbierenden Wänden des Befestigungsträgers und/oder des Fahrzeugrahmens und/oder der Stoßstange entlang vorbestimmten Linien bewegt, um jene Öffnungen unter Bildung von Streifen zu vergrößern. Dazu sind die Bolzen so ausgelegt, dass sie das Wandmaterial abscheren, um die Öffnungen in der energieabsorbierenden Wand zu vergrößern bzw. zu verlängern.

Eine Stoßstange mit die Längsachse ihres Längsträgers querenden plattenartigen Halterungen beschreibt die EP 0 718 158 B1 unter Hinweis darauf, dass neben der Querschnittsform der Stoßstange auch die Ausgestaltung der Verbindung zum Fahrzeuglängsträger deren Formhaltigkeit beeinflusst sowie deren Kompensationsvermögen für die auftreffende Verformungsenergie.

Zum Befestigen der Stoßstange am Fahrzeug sind eine Vielzahl von Halterungen bekannt - beispielsweise aus US-A-5,080,410 oder US-A-4,563,028 --, die jedoch kaum zur Verbesserung der Formhaltigkeit einer Stoßstange bei einem Aufprall beizutragen vermögen.

In der EP 0 894 675 A1 ist eine Stoßstangenanordnung beschrieben, bei dem sich die Halteelemente der Stoßstange konisch aufweiten, und so deren Außenwände sich an die Profilwand der Stoßstange anschmiegen, bzw. in diese übergehen.

Mit der DE 298 23 973 U1 werden besonders leichte Stoßstangen vorgeschlagen, die in stark belasteten Bereichen durch ein zusätzliches Profil verstärkt werden. Dabei kann das Verstärkungsprofil auch aus einem Teil einer Haltevorrichtung für die Stoßstange bestehen. In letzterem Fall erweitern sich die Seitenwände der Haltevorrichtung konisch und kommen mit den Profilleisten der Stoßstange in Anlage.

US 5 725 267 offenbart eine Anordnung die geeignet ist zum Befestigen einer Stoßstange an Längsträgern eines Fahrzeuges, mit einem Profilelement und einem Steckorgan, wobei das Profilelement als wenigstens eine Seitenwand und zwei an diese anschließende Querwände enthaltendes Profil mit einem Hohlprofilträgerabschnitt gestaltet ist, der als Steckabschnitt in einen aus Stahl geformten Längsträger (30) einschiebbar ist, wobei Wandungen des Steckabschnitts des Profilelements mit ihrer Endkante in einem Steckorgan mit Korrosion an benachbarten Flächen aus Leichtmetall und Eisenkohlenstofflegierungen verhinderndem Werkstoff angeordnet sind und der Steckabschnitt mit dem Steckorgan in den Längsträger (30) einschiebbar ist.

In Kenntnis dieser Gegebenheiten hat sich der Erfinder das Ziel gesetzt, eine Stoßstange der eingangs erwähnten Art zu schaffen, die bei geringem Gewicht ein hohes Maß an Formhaltigkeit bei ausreichendem Kompensationsvermögen für die auftreffende Verformungsenergie aufweist, also ein effizientes Energieabsorptionselement entsteht. Herstellung und Handhabung der Stoßstange sowie des Profileiements sollen sehr einfach und die Längsträgerkräfte niedriger sowie zentral sein. Zudem besteht die Aufgabe, den Einfluss der unterschiedlichen Materialien aufeinander zu kompensieren; die Korrosion zwischen einem Profilelement bzw. einer Crashbox aus Aluminium und einem Stahllängsträger muss verhindert werden. Zudem soll die Ungenauigkeit der Bauteile beim Fügeprozess ausgeglichen sowie ein verhältnismäßig großer Spalt zwischen Crashbox und Längsträger geschlossen werden.

Zur Lösung dieser Aufgabe führt die Lehre des unabhängigen Anspruches; die Unteransprüche geben günstige Weiterbildungen an. Zudem fallen in den Rahmen der Erfindung alle Kombinationen aus zumindest zwei der in der Beschreibung, der Zeichnung und/oder den Ansprüchen offenbarten Merkmale. Bei angegebenen Benennungsbereichen sollen auch innerhalb der genannten Grenzen liegende Werte als Grenzwerte offenbart und beliebig einsetzbar sein.

Erfindungsgemäß sind Wandungen des Steckabschnitts des aus einem Leichtmetallwerkstoff geformten Profilelements mit ihrer Endkante in einem Steckorgan mit Korrosion an benachbarten Flächen aus Leichtmetalllegierungen einerseits und Eisenkohlenstofflegierungen anderseits verhinderndem Werkstoff angeordnet, und der Steckabschnitt wird mit den Steckorganen in den Längsträger eingeschoben.

Auch kann dieses aus Leichtmetallwerkstoff geformte Profilelement einen geringeren Querschnitt als der Längsträger aufweisen, der mit wenigstens zwei seiner Innenflächen zum Profilelement hin jeweils einen Spaltraum begrenzt; zudem sind zumindest zwei Wandungen des Steckabschnitts nach dessen Einschub in den Längsträger zu dessen Innenflächen hin verformbar ausgebildet und an diesen festlegbar.

Jenes Steckorgan mit Oberflächenbeschichtungen aus Korrosionsschutzmittel, beispielsweise aus nicht metallischem Werkstoff, bildet eine Schutz- oder Trennschicht zwischen dem Leichtmetall- bzw. Aluminiumwerkstoff des Profilelements zum einen sowie dem eisenhaltigen Längsträger zum anderen, um Korrosionsschäden zu unterbinden. Die Oberfläche kann durch Alitieren, Eloxieren, Sherardisieren, Inchromieren, Phosphatieren, Emaillieren, Verbleien, -zinnen, -kupfern u.ä. Überzugsverfahren behandelt sein oder durch Plattieren, Metallspritzverfahren, Schmelztauchen, Galvanotechnik und dergleichen. Feste Korrosionsschutzmittel lassen sich durch Kleben und Wickeln von Bändern oder Folien durch Aufwalzen, Pressen und dergleichen, durch Auftragen von Anstrichstoffen, durch Lackieren mit sprüh-, roll- oder streichbaren Massen, wie Lacken oder Firnissen, oder durch Aufschmelzen von Schmelzmassen für Schutzhäute und Wirbelsintern auftragen.

Als günstig hat es sich erwiesen, wenn das Profilelement an zumindest zwei einander gegenüberliegenden Wandungen jeweils mit einem einen Wandungsbereich umschließenden Steckorgan versehen und dieses an der Wandung festgelegt ist. Dieses Steckorgan soll zwei an beide Flächen der Wandung anliegende Wandplatten aufweisen, die durch einen Rinnensteg unter Bildung eines Innenraumes verbunden sind; die Weite des Innenraumes entspricht etwa der Dicke der Wandung des Profilelements, und der Rinnensteg soll in Einbaustellung einen Anschlag für die Endkante des Steckabschnitts bilden.

Nach einem weiteren Merkmal der Erfindung ist die äußere Wandplatte mit zwei Seitenstreifen versehen, die außerhalb der Seitenränder der inneren Wandplatte verlaufen sowie unterhalb des Rinnensteges - als Einsetzhilfen dienende -- zum Innenraum des Steckabschnittes geneigte Zungen aufweisen, die bevorzugt jeweils in einem Winkel von etwa 30° zur Wandfläche geneigt sind.

Vorteilhafterweise ist jedem Seitenrand der inneren Wandplatte eine an deren Außenfläche -- bevorzugt etwa in deren Höhenmitte - festliegende Mutter zugeordnet, mit deren Schraubdurchbruch zur Aufnahme einer Profilelement und Steckorgan fest verbindenden Schraube -- ein Durchbruch in der äußeren Wandplatte fluchtet.

Bei einer anderen erfindungsgemäßen Ausgestaltung des Steckorgans sind in Verbindungslage aus dessen innerer Wandung Kragelemente -- insbesondere ringähnliche Formkragen -- etwa radial herausgeformt sowie in Innendurchbrüche der Wandung des Steckorgans eingefügt, um dieses mit der Wandplatte innig zu verbinden.

Erfindungsgemäß ist zudem an die Oberkante der äußeren Wandung der Steckorgane zumindest eine von ihr seitlich abkragende zungenartige Lasche angeformt, die in Einbaustellung einer entsprechenden seitlichen Ausformung des Längsträgers aufliegt sowie mit dieser durch Punktschweißung verbunden zu werden vermag; der Längsträger weist dazu an seiner Stimkante seitliche Mündungsflügel auf, und die auf diese auflegbaren Laschen des Steckorgans werden mit ihnen verschweißt.

Bei einer besonderen Ausgestaltung verbindet die Wandplatten des Steckorgans sowie die sich an deren Innenseiten anschmiegende Wandung des Profilelements zumindest eine Niete als zusätzliches Fixierelement, das nach dem Anbringen der Schrauben auch wieder entfernt werden kann.

Im Rahmen der Erfindung liegt, dass zwei miteinander fluchtend angeordnete Durchbrüche aufweisenden parallelen Wänden des Längsträgers jeweils in Abstand Wände eines Profilelements mit Durchbrüchen gegenüberliegen; diese Durchbrüche von Längsträger und Profilelement bestimmen erfindungsgemäß mit Gewindedurchbrüchen von zwei Werkstoffstreifen, die jeweils innenseitig den Wänden des Profilelements zugeordnet sind, eine gemeinsame Mittelachse. Diese Werkstoffstreifen sind bevorzugt von viereckigem oder sechseckigem Querschnitt.

In diesem Falle ist das Einschieben des Profilelements oder der Crashbox in den Längsträger deshalb vereinfacht, da die Crashbox querschnittlich erheblich kleiner ist als der Längsträger; erfindungsgemäß begrenzen die Seitenwände und die Querwände des Längsträgers mit den Seitenwänden und den diese verbindenden Querwänden des Profilelements jeweils Spalträume, also Distanzbereiche. Bei diesem Profilelement ist den beiden Seitenwänden im Innenraum des Profilelements jeweils in Abstand eine Innenwand zugeordnet, die beidends an die Querwände angeformt und in die etwa in ihrer Längsmitte ein ihren Querschnitt verkürzender Rinnenbereich eingeformt ist. Dieser Rinnenbereich soll mit der anschließenden Querwand des Profilelements einen Aufnahmeraum für einen der Werkstoffstreifen begrenzen, der erfindungsgemäß der Innenfläche der zugeordneten Querwand des Profilelements zumindest im Bereich des Steckabschnitts flächig anliegt.

Um die Querwand des Profilelements an den Längsträger heranführen zu können, sind die Durchbrüche benachbarter Wände der beiden Systemteile von einer Zugschraube durchsetzbar, die in das Gewinde des Gewindedurchbruches des innenseitig anliegenden Werkstoffstreifens eingreift und in diesem drehbar lagert; durch Anziehen der Zugschraube zum Längsträger hin wird der vom Werkstoffstreifen hintergriffene Bereich der Querwand verformt, bis das verformte Profilelement mit den zu seiner Mittellinie parallel nach außen verformten Bereichen seiner Querwände den Innenflächen der benachbarten Wände des Längsträgers anliegt. Dann gehen vorteilhafterweise die beiden Querwände des Profilelements an einem integrierten Krümmungsbereich in den nach außen verformten Bereich über, und die Innenwände weisen nun in verformtem Zustand einen linearen Querschnitt auf.

Das erfindungsgemäße Verfahren zum Einbau des Profilelements umfasst, dass im Gewindedurchbruch des Werkstoffstreifens eine das Profilelement und den Längsträger durchsetzende Zugschraube eingesetzt und diese durch Drehung mit dem Werkstoffstreifen zur Querwand des Längsträgers gezogen wird; die Querwand des Profilelements wird -- wie gesagt -- an die Querwand des Längsträgers angelegt und der Querschnitt der an der Querwand des Profilelements anhängenden beiden Innenwände wird durch Streckung seines Rinnenbereiches linear ausgeformt.

Erfindungsgemäß wird also auf der Crashbox ein Steckorgan mit Korrosionsschutzschicht angebracht, die verhindert, dass der Stahllängsträger und die Crashbox in Kontakt kommen. Das Steckorgan aus Stahlblech wird endwärts mit einer Schräge ausgestaltet, die beim Fügeprozess das Einführen der Crashbox in den Längsträger erleichtert.

Die Crashboxwand wird durch Stahlblech umschlossen. An dessen Innenseite ist zumindest eine Mutter befestigt. Beim Festschrauben der Crashbox wird die Außenwand des Aluminiumprofils an den Längsträger gezogen. Die gebogenen Aluminiumstege werden gestreckt und der Fügespalt zwischen Crashbox und Längsträger geschlossen.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
- Fig. 1:: die Draufsicht auf eine Stoßstange mit -- an beiden Enden der Stoßstange unterschiedlich ausgebildeten -- Halterungen nach dem Stande der Technik zum Anschluss an einen Längsträger;
- Fig. 2:: eine gegenüber Fig. 1 vergrößerte Schrägsicht auf einen Teil der Stoßstange mit Halterung;
- Fig. 3 bzw. 4:: einen Querschnitt durch einen Längsträger mit in ihn eingeschobenem Profilelement als Halterung bzw. einen Teillängsschnitt dazu, der nicht Erfindung gehörend ist;
- Fig. 5 bzw. 6:: einen Querschnitt durch den Längsträger nach Veränderung des als Halterung eingeschobenen Profilelements bzw. den Teillängsschnitt dazu, der nicht Erfindung gehörend ist;
- Fig. 7:: eine Skizze eines teilweise wiedergegebenen Längsträgers mit in Abstand zugeordnetem, Einführhilfen aufweisendem Profilelement;
- Fig. 8:: eine Schrägsicht auf ein Paar von Einführhilfen;
- Fig. 9:: die Einzelteile der Fig. 7 nach dem Zusammenbau;
- Fig. 10:: eine der Fig. 9 entsprechende Darstellung einer anderen Ausführung eines Längsträgers mit darin angeordnetem, Einführhilfen aufweisendem Profilelement;
- Fig. 11:: ein vergrößertes Detail einer weiteren Ausgestaltung einer Einführhilfe.

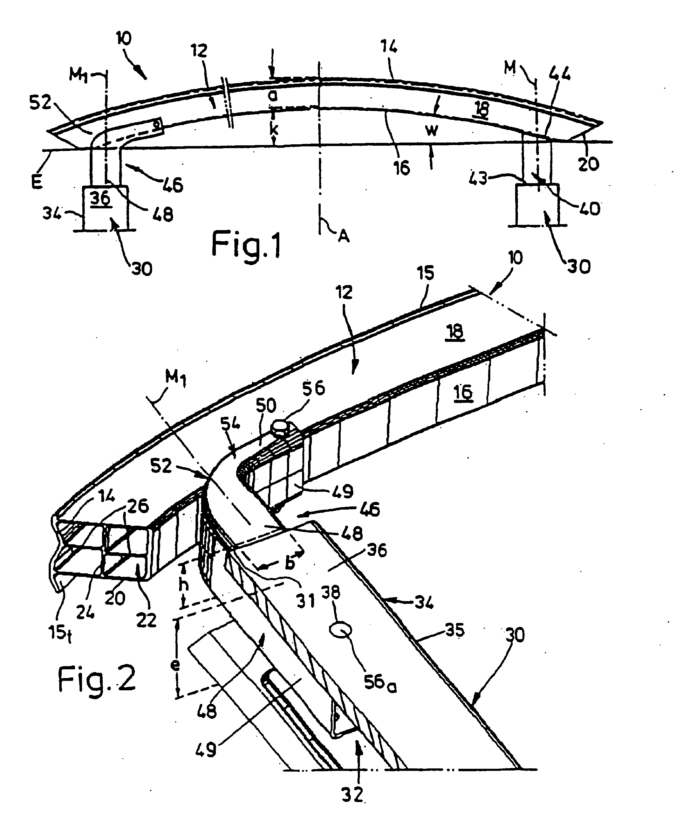

Eine aus einer Aluminiumlegierung stranggepresste Stoßstange 10 für einen aus Gründen der Übersichtlichkeit nicht wiedergegebenen Personenkraftwagen weist gemäß Fig. 1 ein kastenförmiges Hohlprofil 12 mit zwei in Abstand a zueinander verlaufenden Profilwänden 14, 16 auf, die durch zwei Quer- oder Flankenwände 18 verbunden sind. Das Hohlprofil 12 ist einer -- zu der bei A angedeuteten Fahrzeuglängsachse im rechten Winkel verlaufenden - Querebene E zugeordnet sowie beidseits der hier eine Symmetrieebene bildenden Fahrzeuglängsachse A zu jener Querebene E hin gleichmäßig gekrümmt; zu dieser hin bestimmt das Hohlprofil 12 in der im Krümmungszenit liegenden Längsachse A ein Krümmungsmaß k. In Einbaulage bildet die von der Querebene E weg weisende äußere Profilwand 14 einen -- Stoßkräfte aufnehmenden -- Außen- oder Druckgurt, die andere -- innere -- Profilwand 14 einen Innen- oder Zuggurt.

Die Stoßstange 10 ist hier einem Paar von aus Stahl geformten Fahrzeuglängsträgern 30 rechteckigen Querschnitts zugeordnet, die beidseits parallel zur Fahrzeuglängsachse A verlaufen. Sie sind ihrerseits aus zwei parallelen Seitenwänden 34 und diese verbindenden Querwänden 36 zusammengesetzt, die einen Innenraum 32 des Fahrzeuglängsträgers 30 begrenzen.

Nahe der rechten Stirnkante 20 des Hohlprofils 12 ist in Fig. 1 rechtsseitig ein rohrartiges Deformationsorgan 40 aus einem Profilstück angedeutet, das einends an der inneren Profilwand 16 angebracht sowie andernends mit einem Steckabschnitt 43 dem Fahrzeuglängsträger 30 zugeordnet ist. Das auch als Crashbox bezeichnete Deformationsorgan 40 ist ebenfalls aus einem aus Leichtmetall stranggepressten Profilelement gefertigt sowie an dem der Stoßstange 10 zugewandten Ende quer zur Mittellinie M des Deformationsorgans 40 angeschrägt; die so entstehende Schrägkante 44 des Profilelements 40 bestimmt mit der Querebene E einen Winkel w von beispielsweise 10°.

Eine andere Ausgestaltung des Anschlusses des Hohlprofils 12 an den Fahrzeug-Längsträger 30 ist an dem in Fig. 1 linken Ende der Stoßstange 10 skizziert sowie der Fig. 2 zu entnehmen. Deutlich wird hier, dass die als Außengurt dienende -- in sich querschnittlich wellenartig gestaltete - Profilwand 14 beide Quer- oder Flankenwände 18 mit flügelartigen Wandabschnitten als Kantenstreifen 15, 15ₜ übergreift. Auch lässt Fig. 2 erkennen, dass die Seitenwand 34 des Fahrzeuglängsträgers 30 ebenfalls mit einem Kantenstreifen 35 die Außenfläche der angefügten Querwand 36 überragt. Im übrigen ist hier die zweite Seitenwand 34 aus Gründen der Übersichtlichkeit nicht eingezeichnet, ihr Befestigungsbereich schraffiert hervorgehoben.

Im Profilinnenraum 22 des Hohlprofils 12 ist einstückig mit den Profilwänden 14, 16 sowie den diese verbindenden Flankenwänden 18 eine -- parallel zu den Profilwänden 14, 16 gerichtete -- Querwand 24 mit jeweils einer zwischen dieser und den Profilwänden 14, 16 verlaufenden Mittelwand 26 vorgesehen. Diese Mittelwände 26 sind zueinander erkennbar höhen- bzw. seitenversetzt.

Der Anschluss des Hohlprofils 12 an den Fahrzeuglängsträger 30 wird hier durch ein aus einem -- seinerseits aus einer Aluminiumlegierung stranggepressten -- Hohlprofil der Breite b von beispielsweise 55 mm sowie der Höhe h von 75 mm gestalteten Halteglied 46 hergestellt. An dessen dem Fahrzeuglängsträger 30 der Profilhöhe e bzw. dessen Stirnkante 31 zugeordneten und in diesem verschraubten Steckabschnitt 48 etwa rechteckigen Querschnitts -- aus zwei parallelen Seitenwänden 49 und diese verbindenden Querwänden 50 des Hohlprofils der Halterung 46 -- schließt ein Krümmungsabschnitt 52 an; die in Fig. 2 rechte Seitenwand 49 ist nach außen - - also hier aus der Längsachse M₁ des Steckabschnittes 48 nach rechts - gekrümmt und die andere Seitenwand 49 endwärts an diese so herangeführt, dass beide Seitenwände 49 aufeinanderliegen und jede der beiden Querwände 50 etwa in ihrer Längsmitte gefaltet ist. Dabei verläuft die innere Krümmungskontur entsprechend der Außenfläche der inneren Profilwand 16 des Hohlprofils 12, d.h. sie schließt mit einer Parallelen zur Querebene E den erwähnten Winkel w ein.

Die doppellagigen Schenkel 54 des so entstandenen rinnenartigen Krümmungsabschnitts 52 werden im Bereich von - in der Zeichnung nicht erkennbaren -- Durchbrüchen von Schrauben 56 od.dgl. Verbindungsorganen durchsetzt, welche zudem in stoßstangenseitige Durchbrüche der Flankenwände 18 eingreifen. Entsprechende Durchbrüche für Verbindungsorgane 56ₐ sind im Steckabschnitt 48 des Haltegliedes 46 vorgesehen. Diese Verbindungsorgane 56ₐ lagern im Fahrzeuglängsträger 30 in Durchbrüchen 38.

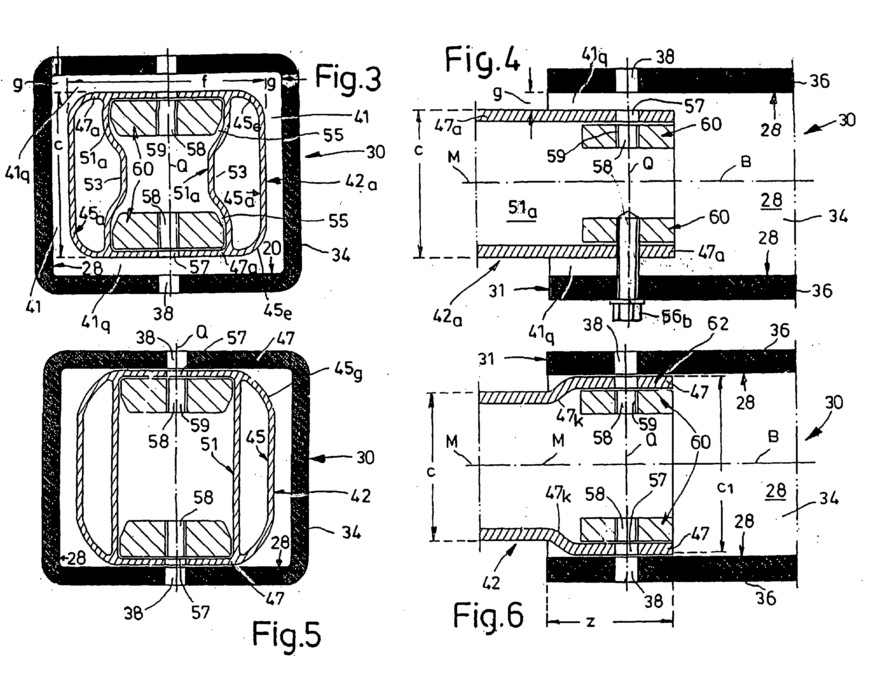

In den Längsträger 30 der Fig. 3, 4 ist ein Profilelement oder eine Crashbox 42ₐ i.w. rechteckigen Querschnitts aus zwei Seitenwänden 45ₐ und zwei diese verbindenden Querwänden 47ₐ der Wandlängen c, f eingeschoben. Die Übergänge der Seitenwände 45ₐ in die Querwände 47ₐ bilden teilkreisförmig gekrümmte Eckbereiche 45ₑ.

Um den Einschubvorgang zu vereinfachen, verlaufen die Seitenwände 45ₐ, 47ₐ jeweils in einem Abstand g zur benachbarten Innenfläche 28 der Seitenwände 34 sowie der Querwände 36 des Längsträgers 30 unter Bildung von Spalträumen 41 bzw. 41q.

Im Profilelement 42ₐ ist innenseitig jeder Seitenwand 45ₐ eine Innenwand 51ₐ vorgesetzt, die beidends an die Querwände 47ₐ angeformt ist und in Abstand zu diesen einen rinnenartigen Querschnitt anbietet. An jedem Anformbereich befindet sich ein -- vom Rinnenbereich 53 der Innenwand 51 bestimmter - Aufnahmeraum 55 für einen darin lagernden Werkstoffstreifen 60 seckseckigen Vollquerschnitts. Letzterer ist mit einem Gewindedurchbruch 58 ausgestattet, der mit einem Durchbruch 57 der benachbarten Querwand 47ₐ sowie dem Durchbruch 38 im Längsträger 30 fluchtet.

In Fig. 4 fluchtet die Mittellinie M des Profilelements 42ₐ mit der Längsachse B des umgebenden Längsträgers 30. Die Querwände 47ₐ des in jenem Abstand g zu den Innenflächen 28 des Längsprofils 30 stehenden Profilelements 42ₐ verlaufen erkennbar achsparallel. Die fluchtenden Durchbrüche 38, 57, 58 der einen Systemseite bestimmen mit den Durchbrüchen 58, 57, 38 der anderen Systemseite eine gemeinsame Mittelachse Q und nehmen jeweils eine in Fig. 4 angedeutete Zugschraube 56_{b} auf, welche endwärts mit dem Gewinde 59 des Gewindedurchbruches 58 verschraubt wird und unter Verformung des Profilelements 42ₐ dessen Querwand 47ₐ samt dem Werkstoffstreifen 60 an die benachbarte Seitenwand 34 des Längsträgers 30 heranzieht. Durch diese Verformung entsteht das in den Fig. 5, 6 skizzierte Profilelement 42.

Dieses Profilelement 42 weist in den Fig. 5, 6 statt jener gebogenen Innenwände 51ₐ der Fig. 3 den Seitenwänden 45 zur Mittelachse Q hin -- dank des erfolgten Biegeprozesses -- querschnittlich achsparallele Innenwände 51 auf, so dass die dadurch angehobenen Bereiche 47 der Querwände hier den Innenflächen 28 des Längsträgers 30 unmittelbar anliegen, und ihr Außenabstand c₁ entspricht etwa der Weite des Profilelements 42, die sich gemäß Fig. 6 dank eines Krümmungsbereiches 47ₖ auf die zu Fig. 3 erwähnte Wandlänge c reduziert. Es entsteht so innerhalb des Längsträgers 30 ein diesem beidseits anliegender Steckabschnitt 62 axialer Länge z. Die beiden zur Mittelachse Q parallelen Seitenwände 45, die mit gegenüber Fig. 3 gestreckteren Eckbereichen 45_{g} in die angrenzenden Querwände 47 übergehen, behalten den Spaltabstand g zur Innenfläche 28 des Längsträgers 30.

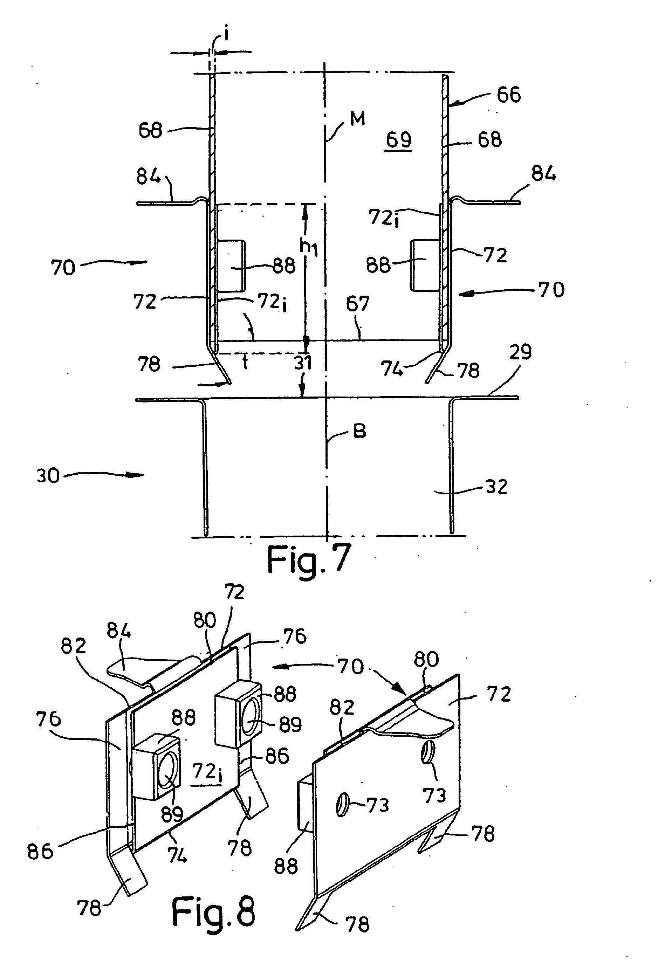

Eine besondere Konstruktion ist Fig. 7, 8 zu entnehmen. Da Längsträger 30 und Profilelemente automatisch gefügt und im Rohbau punktgeschweißt werden müssen, entstehen u.a. die folgenden Probleme:
(a) Ungenauigkeit der Bauteildimensionierung beim Fügeprozess muss ausgeglichen werden;
(b) zwischen der Crashbox aus Aluminiumwerkstoff und dem Stahllängsträger muss Korrosion verhindert werden;
(c) das aus einer Aluminiumlegierung geformte Profilelement und der Längsträger müssen durch Punktschweißen verbunden werden;
(d) der große Spalt zwischen Profilwand und Längsträger muss geschlossen werden.

Um hier eine Lösung zu schaffen, wird auf dem Profilelement bzw. der rohrförmigen Crashbox 66 der Fig. 7 ein Steckorgan 70 aus Stahlblech mit Korrosionsschutzschicht -- einem Schutzlack oder einer Folie -- angebracht; letztere verhindert, dass der Stahllängsträger 30 und der Aluminiumwerkstoff der -- durch Querwände 69 verbundenen -parallelen Crashboxwände 68 in Kontakt kommen.

Wie vor allem Fig. 8 erkennen lässt, weist das Steckorgan 70 einen querschnittlich U-förmigen Körper aus zwei parallelen Wandplatten 72, 72ᵢ auf, die durch einen -- in Einbaulage quer zur Mittellinie M verlaufenden -- unteren Rinnensteg 74 verbunden sind und einen Innenraum 80 begrenzen. Dessen Weite entspricht etwa der Dicke i der Wandung 68 der Crashbox 66.

Die äußere Wandplatte 72 enthält zwei zueinander parallele Seitenstreifen 76, die außerhalb der Seitenränder 86 der inneren Wandplatte 72ᵢ verlaufen sowie endwärts zu dieser geneigt sind und die Rinnenanformung 74 überragende Zungen 78 aufweisen. Der Neigungswinkel t zwischen der Zunge 78 und der Wandfläche der Wandplatte 72 misst hier etwa 30°. Diese Zungen 78 erleichtern das Einführen der im Innenraum 80 des Steckorgans 70 lagernden Crashbox 66 in den Längsträger 30, d.h. deren parallele Wände 68 werden jeweils durch das Stahlblech umschlossen.

Von der Oberkante 82 der äußeren Wandplatte 72 ragt nach außen eine an diese angeformte zungenartige Lasche 84 ab, und an der inneren Wandplatte 72ᵢ sind etwa in halber Höhe h₁ zwei jeweils einen von deren Seitenrändern 86 zugeordnete Mutter 88 festgelegt. Deren zentraler, Schraubdurchbruch 89 fluchtet mit einem Durchbruch 73 in der äußeren Wandplatte 72.

Die Crashbox 66 wird mit dem als Steckabschnitt 62ₐ axialer Länge z dienenden Endbereich koaxial in den Längsträger 30 abgesenkt; die Crashbox 66 dient als Einsteckhilfe, wobei die vier Zungen 78 des Steckorgans 70 zusätzliche Einführhilfen darstellen.

Um eine feste Verbindung zwischen Crashbox 66 und Längsträger 30 zu gewährleisten, müssen auch das Steckorgan 70 und die Crashbox 66 durch eine feste Verbindung zusammengefügt werden. Hierzu wird letztere mit in die Muttern 88 ragenden Schrauben 64 versehen. Dann wird diese Einheit in den Längsträger 30 geschoben, und mit ihm punktgeschweißt, d. h. die Laschen 84 werden mit seitlichen Mündungsflügeln 29 des Längsträgers 30 durch Punktschweißen verbunden. Nunmehr werden die Schrauben 64 betätigt, welche die äußere Wandplatte 72 des Steckorgans 70 an den Längsträger 30 ziehen. Die gebogenen Stege aus Aluminiumwerkstoff werden gestreckt und der Fügespalt zwischen Crashbox 66 und Längsträger 30 geschlossen.

Bevor man die Crashbox 66 mit dem Längsträger 30 verschraubt, wird die Fahrzeug-Karosserie mit Trägersystem KTL (katodische Tauchlackierung) beschichtet und lackiert.

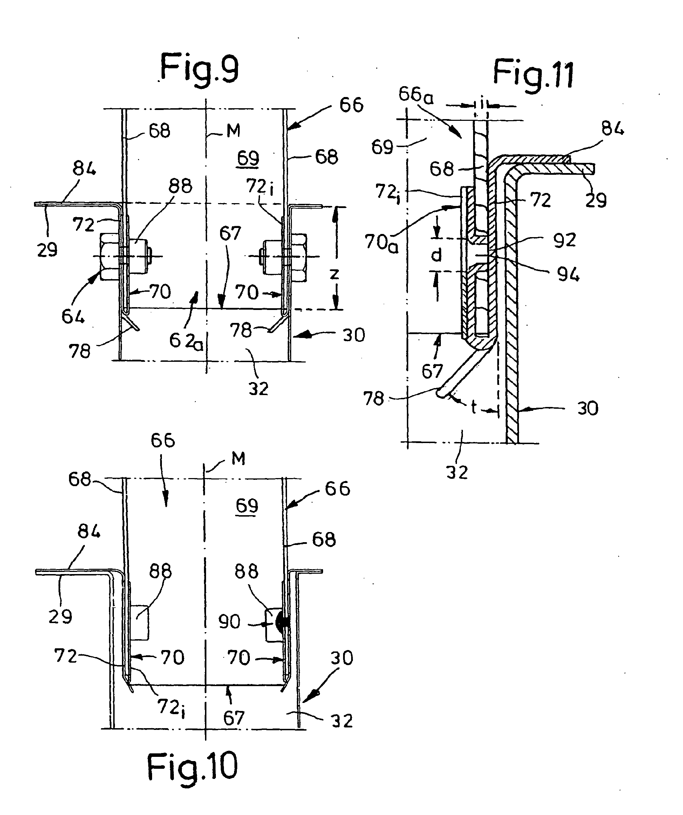

In Fig. 10 ist eine weitere Gestaltung der Anbindung eines Steckorgans 70 mit der Crashbox 66 skizziert. Dieses Steckorgan 70 wird mittels einer metallischen Niete 90 als Fixierhilfe mit der Wand 68 der Crashbox 66 verbunden und kann zudem mit Schrauben 64 festgelegt werden; deren Muttern 88 sind in seitlichem Abstand zur Niete 90 zu erkennen.

Die Wand 68 des Profilelements 66ₐ der Fig. 11 ist nahe dessen Endkante 67 mit Durchbrüchen 92 des Durchmessers d versehen, in die jeweils ein Formkragen 94 als Tragelement der inneren Wandplatte 72ᵢ des anliegenden Steckorgans 70ₐ eingedrückt wird. Jener Formkragen 94 entsteht durch einen Stanzprozess und führt zu einer festen Fixierung.

## Patentansprüche

1. Anordnung zum Befestigen einer Stoßstange (10) an Längsträgern (30) eines Fahrzeuges, mit einem Profilelement (66, 66a) und Steckorganen (70, 70a), wobei das Profilelement (66, 66a) als wenigstens eine Seitenwand (68) und zwei an diese anschließende Querwände (69) enthaltendes Profil mit einem Hohlprofilträgerabschnitt gestaltet ist, der als Steckabschnitt (62a) in einen aus Stahl geformten Längsträger (30) einschiebbar ist, wobei Wandungen (68) des Steckabschnitts (62a) des Profilelements (66, 66a) mit ihrer Endkante (67) jeweils in einem Steckorgan (70, 70a) mit Korrosion an benachbarten Flächen aus Leichtmetall und Eisenkohlenstofflegierungen verhinderndem Werkstoff angeordnet sind und der Steckabschnitt (62a) mit den Steckorganen (70, 72a) in den Längsträger (30) einschiebbar ist, wobei das Profilelement (66, 66a) aus einem Leichtmetallwerkstoff geformt ist, und jedes Steckorgan (70, 70a) zwei an beiden Flächen der entsprechende Wandung (68) anliegende Wandplatten (72, 72i) aufweisen, die durch einen Rinnensteg (74) unter Bildung eines eine Endkante (67) der Wandung (68) aufnehmenden Innenraumes (80) verbunden sind.

2. Anordnung nach Anspruch 1, **dadurch gekennzeichnet, dass** die Steckorgane (70, 70a) eine Trennschicht zwischen dem Profilelement (66, 66a) sowie dem Längsträger (30) bilden.

3. Anordnung nach Anspruch 1 oder 2, **gekennzeichnet durch** eine auf die Steckorgane (70, 70a) aufgebrachte Beschichtung aus Korrosionsschutzmittel, insbesondere Folienlacke als Schutzhäute.

4. Anordnung nach Anspruch 1 oder 2, **gekennzeichnet durch** verzinktes Stahlblech als Außenfläche der Steckorganen (70, 70a).

5. Anordnung nach einem der Ansprüche 1 bis 4, **dadurch gekennzeichnet, dass** das Profilelement (66, 66a) an zumindest zwei einander gegenüberliegenden Wandungen (68) jeweils mit einem einen Wandungsbereich umschließenden Steckorgan (70, 70a) versehen und dieses an der Wandung festgelegt ist.

6. Anordnung nach einem der Ansprüche 1 bis 5, **dadurch gekennzeichnet, dass** der Rinnensteg (74) einen Anschlag für die Endkante (67) des Steckabschnitts (62a) bildet.

7. Anordnung nach einem der Ansprüche 1 bis 5, **dadurch gekennzeichnet, dass** die Weite des Innenraumes (80) etwa der Dicke (i) der Wandung (68) des Profilelements (66, 66a) entspricht.

8. Anordnung nach einem der Ansprüche 5 bis 7, **dadurch gekennzeichnet, dass** die äußere Wandplatte (72) mit zwei Seitenstreifen (76) versehen ist, die außerhalb der Seitenränder (86) der inneren Wand platte (72;) verlaufen sowie unterhalb des Rinnensteges (74) einwärts geneigte Zungen (78) aufweisen.

9. Anordnung nach Anspruch 8, **dadurch gekennzeichnet, dass** die Zunge (78) in einem Winkel (t) zur Wandfläche geneigt ist, der bevorzugt etwa 30° misst.

10. Anordnung nach einem der vorhergehenden Ansprüche, **dadurch gekennzeichnet, dass** jedem Seitenrand (86) der inneren Wandplatte (72;) eine an deren Außenfläche etwa inmitten deren Höhe (h1) festliegende Mutter (88) zugeordnet ist, mit deren Schraubdurchbruch (89) ein Durchbruch (73) in der äußeren Wandplatte (72) fluchtet.

11. Anordnung nach einem der vorhergehenden Ansprüche, **dadurch gekennzeichnet, dass** in Verbindungslage jedes Steckorgans (708) aus dessen innerer Wandplatte (72;) seitlich abragende Kragelemente (94) herausgeformt sowie in entsprechende Innendurchbrüche (92) der Wandung (68) des Steckorgans eingefügt sind.

12. Anordnung nach Anspruch 11, **gekennzeichnet durch** einen ringähnlichen Formkragen (94) als Kragelement.

13. Anordnung nach einem der vorhergehenden Ansprüche, **dadurch gekennzeichnet, dass** an die Oberkante (82) der äußeren Wandplatte (72) der Steckorgane (70, 70a) zumindest eine von ihr seitlich abkragende zungenartige Lasche (84) angeformt ist.

14. Anordnung nach einem der vorhergehenden Ansprüche, **dadurch gekennzeichnet, dass** der Längsträger (30) an seiner Stirnkante (31) mit seitlichen Mündungsflügeln (29) versehen und auf diese jeweils eine Lasche (84) jedes Steckorgans (70, 70a) auflegbar sowie mit ihnen verschweißbar ist.

15. Anordnung nach einem der vorhergehenden Ansprüche, **dadurch gekennzeichnet, dass** die Wandplatten (72, 72;) der Steckorgane (70) sowie die sich an deren Innenseiten anschmiegende Wandung (68) des Profilelements (66) zumindest eine Niete (90) verbindet.

## Claims

1. An arrangement for fastening a bumper (10) to longitudinal beams (10) of a vehicle, comprising a profile element (66, 66a) and insertion members (70, 70a), with the profile element (66, 66a) being arranged as a profile with a hollow profile carrier section containing at least one side wall (68) and two transverse walls (69) adjacent thereto, which can be inserted as an insertion section (62a) into a longitudinal beam (30) made of steel, with walls (68) of the insertion section (62a) of the profile element (66, 66a) respectively being arranged with their terminal edge (67) in an insertion member (70, 70a) with a material preventing corrosion on adjacent surfaces made of light metal and iron-carbon alloys, and the insertion section (62a) with the insertion members (70, 72a) can be inserted into the longitudinal beam (30), with the profile element (66, 66a) being formed from a light-metal alloy, and each insertion member (70, 70a) comprises two wall plates (72, 72i) resting on both surfaces of the respective wall, said wall plates (72, 72i) being connected by a flute-shaped web (74) by forming an interior space (80) accommodating a terminal edge (67) of the wall (68).

2. An arrangement according to claim 1, **characterized in that** the insertion members (70, 70a) form a separating layer between the profile element (66, 66a) and the longitudinal beam (30).

3. An arrangement according to claim 1 or 2, **characterized by** a coating made of an anticorrosive agent, especially foil lacquers as protective skins, which is applied to the insertion members (70, 70a).

4. An arrangement according to claim 1 or 2, **characterized by** galvanized steel sheet as the exterior surface of the insertion members (70, 70a).

5. An arrangement according to one of the claims 1 to 4, **characterized in that** the profile element (66, 66a) is provided respectively on at least two mutually opposite walls (68) with an insertion member (70, 70a) enclosing the wall region, and said insertion member (70, 70a) is fixed to the wall.

6. An arrangement according to one of the claims 1 to 5, **characterized in that** the flute-shaped web (74) forms a stop for the terminal edge (67) of the insertion section (62a).

7. An arrangement according to one of the claims 1 to 5, **characterized in that** the width of the interior space (80) approximately corresponds to the thickness (i) of the wall (68) of the profile element (66, 66a).

8. An arrangement according to one of the claims 5 to 7, **characterized in that** the outer wall plate (72) is provided with two lateral strips (76) which extend outside of the lateral edges (86) of the inner wall plate (72;) and comprise inwardly inclined tongues (78) beneath the flute-shaped web (74).

9. An arrangement according to claim 8, **characterized in that** the tongue (78) is inclined at an angle (t) in relation to the wall surface, which angle (t) preferably measures approximately 30°.

10. An arrangement according to one of the preceding claims, **characterized in that** a nut (88) is associated with each lateral edge (86) of the inner wall plate (72;), which nut (88) is fixed to its outer surface approximately in the middle of its height (h1), with its screw breakthrough (89) being in alignment with a breakthrough (73) in the outer wall plate (72).

11. An arrangement according to one of the preceding claims, **characterized in that** in the connecting position of each insertion member (708) laterally protruding collar elements (94) are formed from its inner wall plate (72;) and are inserted into respective inner breakthroughs (92) of the wall (68) of the insertion member.

12. An arrangement according to claim 11, **characterized by** an annularly formed collar (94) as a collar element.

13. An arrangement according to one of the preceding claims, **characterized in that** at least one tongue-like tab (84) is integrally formed on the upper edge (82) of the outer wall plate (72), said tab (84) protruding laterally from said wall plate (72).

14. An arrangement according to one of the preceding claims, **characterized in that** the longitudinal beam (30) is provided at its front edge (31) with lateral orifice wings (29) and one respective tab (84) of each insertion member (70, 70a) can be placed on said orifice wings (29) and can be welded together therewith.

15. An arrangement according to one of the preceding claims, **characterized in that** the wall plates (72, 72;) of the insertion members (70) and the wall (68) of the profile element (66) which rests on their insides are connected by at least one rivet (90).

## Revendications

1. Disposition pour la fixation d'une barre pare-chocs (10) sur des longerons (30) d'un véhicule, avec un élément profilé (66, 66a) et des organes d'emboîtement (70, 70a), dans laquelle l'élément profilé (66, 66a) est conformé comme un profilé comportant au moins une paroi latérale (68) et deux parois transversales (69) se raccordant à celle-ci avec une section de support de profilé creux, qui peut être insérée comme une section de longueur (62a) dans un longeron (30) formé en acier, dans laquelle des parois (68) de la section de longueur (62a) de l'élément profilé (66, 66a) sont disposées chacune par son arête d'extrémité (67) dans un organe d'emboîtement (70, 70a) avec un matériau empêchant la corrosion des surfaces voisines en alliage léger et en alliages de fer et de carbone et la section de longueur (62a) peut être insérée avec les organes d'emboîtement (70, 72a) dans le longeron (30), l'élément profilé (66, 66a) étant formé dans un matériau en alliage léger et chaque organe d'emboîtement (70, 70a) présentant deux plaques de paroi (72, 72i) reposant sur les deux surfaces de la paroi (68) correspondante, qui sont reliées par une barrette à gorge (74) en formant un espace intérieur (80) qui reçoit une arête d'extrémité (67) de la paroi (68).

2. Disposition selon la revendication 1, **caractérisée en ce que** les organes d'emboîtement (70, 70a) forment une couche de séparation entre l'élément profilé (66, 66a) et le longeron (30).

3. Disposition selon la revendication 1 ou 2, **caractérisée en ce qu'**elle comporte un revêtement fait d'un produit anticorrosion, en particulier de vernis en film formant des peaux de protection, appliqué sur les organes d'emboîtement (70, 70a).

4. Disposition selon la revendication 1 ou 2, **caractérisée en ce que** la surface extérieure des organes d'emboîtement (70, 70a) est formée de tôle d'acier galvanisée.

5. Disposition selon l'une des revendications 1 à 4, **caractérisée en ce que** l'élément profilé (66, 66a) est muni sur au moins deux parois (68) se faisant face d'un organe d'emboîtement (70, 70a) circonscrivant une zone de paroi et celui-ci est fixé à la paroi.

6. Disposition selon l'une des revendications 1 à 5, **caractérisée en ce que** la barrette à gorge (74) forme une butée pour l'arête d'extrémité (67) de la section de longueur (62a).

7. Disposition selon l'une des revendications 1 à 5, **caractérisée en ce que** la largeur de l'espace intérieur (80) correspond approximativement à l'épaisseur (i) de la paroi (68) de l'élément profilé (66, 66a).

8. Disposition selon l'une des revendications 5 à 7, **caractérisée en ce que** la plaque de paroi extérieure (72) est munie de deux bandes latérales (76) qui passent à l'extérieur des bords latéraux (86) de la plaque de paroi intérieure (72i) et présentent des languettes (78) inclinées vers l'avant en dessous de la barrette à gorge (74).

9. Disposition selon la revendication 8, **caractérisée en ce que** la languette (78) est inclinée d'un angle (t) par rapport à la surface de la paroi qui mesure de préférence environ 30°.

10. Disposition selon l'une des revendications précédentes, **caractérisée en ce que** chaque bord latéral (86) de la plaque de paroi intérieure (72i) est associé à un écrou (88) fixé sur sa surface extérieure à peu près au milieu de sa hauteur (h1), dont l'ouverture filetée (89) est alignée avec une ouverture (73) dans la plaque de paroi extérieure (72).

11. Disposition selon l'une des revendications précédentes, **caractérisée en ce que** des éléments formant collet (94) dépassant latéralement de sa plaque de paroi intérieure (72i) sont formés dans la couche de liaison de chaque organe d'emboîtement (708) et sont insérés dans des ouvertures intérieures (92) correspondantes de la paroi (68) de l'organe d'emboîtement.

12. Disposition selon la revendication 11, **caractérisée en ce que** l'élément formant collet est un collet mis en forme (94) ressemblant à un anneau.

13. Disposition selon l'une des revendications précédentes, **caractérisée en ce qu'**est formée sur l'arête supérieure (82) de la plaque de paroi extérieure (72) des organes d'emboîtement (70, 70a) au moins une patte (84) en forme de languette qui s'écarte de celle-ci latéralement.

14. Disposition selon l'une des revendications précédentes, **caractérisée en ce que** le longeron (30) est muni sur sa face d'extrémité (31) d'ailettes d'embouchure (29) latérales et une patte (84) de l'organe d'emboîtement (70, 70a) pet être posée sur chacune de celles-ci et soudée avec elle.

15. Disposition selon l'une des revendications précédentes, **caractérisée en ce que** les plaques de paroi (72, 72i) de l'organe d'emboîtement (70) et la paroi (68) de l'élément profilé (66) qui s'applique sur leurs faces intérieures sont reliées par au moins un rivet (90).
